# EUROPÄISCHE PATENTANMELDUNG

(11) **EP 3 822 014 A1**
(43) Veröffentlichungstag der Anmeldung: **19.05.2021**
(21) Anmeldenummer: 19209707.9
(22) Anmeldetag: 18.11.2019
(51) Int. Cl.: B23K 9/127, B23K 9/173, B23K 9/12

(54) **VERFAHREN ZUM ABTASTEN DER OBERFLÄCHE METALLISCHER WERKSTÜCKE**

(71) Anmelder: FRONIUS INTERNATIONAL GmbH, 4643 Pettenbach (AT)
(72) Erfinder: MAYER, Manuel, 4643 Pettenbach (AT); WALDHÖR, Andreas, 4643 Pettenbach (AT); BINDER, Manuel, 4643 Pettenbach (AT)
(74) Vertreter: Sonn & Partner Patentanwälte

(57) **Zusammenfassung**

Verfahren zum Abtasten der Oberfläche (O) metallischer Werkstücke (W), wobei vor der Durchführung eines Schweißprozesses während eines Abtastprozesses ein Schweißbrenner (1) mit einem abschmelzbaren Schweißdraht (2) über die Oberfläche (O) der Werkstücke (W) bewegt wird, und zu vorgegebenen Zeitpunkten (tᵢ) der Schweißdraht (2) zur Oberfläche (O) der Werkstücke (W) bewegt wird, bis ein Kontakt des Schweißdrahts (2) mit einem der Werkstücke (W) detektiert wird, und die Position (Pᵢ) der Oberfläche (O) der Werkstücke (W) zu jedem Zeitpunkt (tᵢ) in der Schweißstromquelle (4) ermittelt und gespeichert wird. Zur Reduktion des Rechenaufwands und Erhöhung der Verarbeitungsgeschwindigkeit wird eine Kante (K) ermittelt, wenn die aktuellen Position (Pᵢ) der Oberfläche (O) der Werkstücke (W) um einen vorgegebenen Schwellwert (S) über zumindest einer der gespeicherten vorhergehenden Positionen (Pᵢ₋ₙ) der Oberfläche (O) der Werkstücke (W) liegt, und im Falle der Ermittlung einer Kante (K) ein Kantendetektionsparameter (KP) gesetzt und zusammen mit dem aktuellen Positionswert (Pᵢ) ausgegeben.

## Beschreibung

Die Erfindung betrifft ein Verfahren zum Abtasten der Oberfläche metallischer Werkstücke, wobei vor der Durchführung eines Schweißprozesses während eines Abtastprozesses ein Schweißbrenner mit einem abschmelzbaren Schweißdraht mit Hilfe eines Manipulators entlang einer vorgegebenen Bahn und mit einer vorgegebenen Geschwindigkeit über die Oberfläche der Werkstücke bewegt wird, und zu vorgegebenen Zeitpunkten der Schweißdraht mit einer Vorwärtsgeschwindigkeit zur Oberfläche der Werkstücke bewegt wird, bis von einer Schweißstromquelle ein Kontakt des Schweißdrahts mit einem der Werkstücke detektiert wird, und der Schweißdraht anschließend mit einer Rückwärtsgeschwindigkeit wieder von den Werkstücken wegbewegt wird, und die Position der Oberfläche der Werkstücke zu jedem Zeitpunkt in der Schweißstromquelle ermittelt und gespeichert wird.

Der Schweißdraht eines Schweißgeräts kann vor einem Schweißprozess dazu verwendet werden, die Oberfläche der zu bearbeitenden Werkstücke abzutasten, indem der Schweißdraht als Sensor verwendet wird, indem er zu vorgegebenen Zeitpunkten in Richtung Werkstück bewegt wird, bis der Schweißdraht das Werkstück berührt. Anschließend wird der Schweißdraht wieder vom Werkstück wegbewegt. Über die Bewegungen des Schweißdrahts, welche durch Drehgeber in den Antriebsrollen des Vorschubgeräts erfasst werden, kann auf die Position des Schweißdrahts beim Kontakt mit dem Werkstück, und somit auf die Position der Oberfläche des Werkstücks rückgeschlossen werden.

Beispielsweise beschreibt die WO 2019/002141 A1 ein Verfahren und eine Vorrichtung zur Abtastung einer Oberfläche eines metallischen Werkstücks mit Hilfe des Schweißdrahts des Schweißbrenners. Dabei wird während des Abtastprozesses bei jedem Kurzschluss des Schweißdrahts mit dem metallischen Werkstück ein Positionswert ermittelt und gespeichert bzw. ausgegeben, welcher vom Manipulator zum Detektieren einer Kante oder einer bestimmten Position benutzt werden kann. Die hierfür benötigten Algorithmen müssten von sämtlichen Herstellern von Manipulatoren in deren Steuerung implementieren werden, was softwaremäßig einen sehr großen Aufwand bedeutet. Vorhandene Robotersteuerungen und Interfaces brauchen für eine solche Auswertung üblicherweise zu lange, weshalb nur sehr geringe Geschwindigkeiten des Schweißbrenners während des Abtastprozesses für eine ausreichende Genauigkeit gewählt werden können.

Die Aufgabe der vorliegenden Erfindung besteht in der Schaffung eines oben genannten Abtastverfahrens, welches möglichst rasch durchführbar sein soll und keine besonderen Rechenleistungen für die Auswertung im Manipulator erfordert. Nachteile bekannter Abtastverfahren sollen verhindert oder zumindest reduziert werden.

Gelöst wird die erfindungsgemäße Aufgabe durch ein oben genanntes Verfahren, wobei eine Kante ermittelt wird, wenn die aktuelle Position der Oberfläche der Werkstücke um einen vorgegebenen Schwellwert über zumindest einer der gespeicherten vorhergehenden Positionen der Oberfläche der Werkstücke liegt, und dass im Falle der Ermittlung einer Kante ein Kantendetektionsparameter gesetzt und zusammen mit dem aktuellen Positionswert ausgegeben wird. Erfindungsgemäß erfolgt die Verarbeitung der Daten für die Kantendetektion in der Stromquelle bzw. im Schweißgerät und es wird an Stelle einer Vielzahl von Positionsdaten lediglich ein Kantendetektionsparameter gesetzt und zusammen mit dem aktuellen Positionswert ausgegeben bzw. an den Manipulator weitergeleitet. Dadurch kann die Auswertung, welche bisher vom Manipulator bzw. Schweißroboter durchgeführt wurde, schneller erfolgen und dadurch auch der Abtastprozess rascher durchgeführt werden. Da die Verarbeitung während des Abtastprozesses vom Schweißgerät bzw. der Stromquelle vorgenommen wird, müssen auch keine entsprechenden Rechenkapazitäten im Manipulator vorgesehen werden. Nach dem neuen Verfahren wird lediglich beim Überschreiten des vorgegebenen Schwellwerts in einer Richtung, welche der Längsrichtung des Schweißdrahtes entspricht, ein Kantendetektionsparameter gesetzt, der das Vorliegen der Kante anzeigt. Im Falle des Setzens des Kantendetektionsparameters wird der aktuelle Positionswert gespeichert bzw. ausgegeben. Im Gegensatz zur Übertragung einer Reihe von Positionswerten an den Manipulator muss beim gegenständlichen Verfahren lediglich der Kantendetektionsparameter zusammen mit dem aktuellen Positionswert an den Manipulator übermittelt werden. Dadurch ist das Verfahren viel schneller und einfacher durchführbar. Der Manipulator muss nicht so viele Daten auswerten wie bisher, weshalb der Manipulator schneller arbeiten kann, oder die Rechenleistung des Manipulators nicht mehr so groß sein muss, und dieser somit einfach und billiger ausgeführt werden kann. Als Manipulator kommt insbesondere ein Roboter infrage, aber auch andere Einrichtungen, wie z.B. automatische Schweißvorrichtungen, Linearbewegungseinrichtungen oder dgl.. Durch die direkte Auswertung in einem Prozessregler des Schweißgeräts bzw. der Stromquelle kann man das Abtastverfahren prozesssynchron und flexibler filtern, weshalb es auch möglich ist, Kanten von Werkstücken auf unebenen, schrägen oder gekrümmten Oberflächen zu erkennen. Dadurch, dass der Manipulator beim gegenständlichen Auswerteverfahren nur noch den Kantendetektionsparameter, der im einfachsten Fall nur ein Bit umfasst, abfragen muss, kann die Verfahrensgeschwindigkeit ohne Genauigkeitsverlust deutlich erhöht werden.

Vorteilhafterweise wird dann eine Kante ermittelt, wenn die aktuelle Position der Oberfläche der Werkstücke um den vorgegebenen Schwellwert über dem Mittelwert von mehreren, vorzugsweise 2 bis 100 gespeicherten vorhergehenden Positionen der Oberfläche der Werkstücke liegt. Dies stellt eine geeignete Verfahrensoption dar, welche durch die Bildung von Mittelwerten nicht so störungsanfällig ist. Durch eine entsprechende Mittelwertbildung wird bei einer langsam stetig ansteigenden Werkstückoberfläche nie eine Kante detektiert und ein Kantendetektionsparameter gesetzt und zusammen mit dem aktuellen Positionswert ausgegeben.

Das Ende der Kante wird festgestellt, wenn die aktuelle Position der Oberfläche der Werkstücke gegenüber zumindest einem der gespeicherten vorhergehenden Positionen im Wesentlichen gleich bleibt. Auf diese Weise wird beim Abtastprozess das Ende der Kante festgestellt, wenn der Schweißdraht im Wesentlichen wieder eine ebene Oberfläche der Werkstücke registriert.

Gemäß einem weiteren Merkmal der Erfindung wird die Differenz der Position der Oberfläche der Werkstücke am Ende der ermittelten Kante und der letzten gespeicherten Position vor dem Feststellen der Kante als Wert der Kantenhöhe ermittelt und ausgegeben. Mit dem erfindungsgemäßen Verfahren kann in Abhängigkeit der vorgegebenen Zeitpunkte, zu welchen die Oberfläche der Werkstücke mit dem Schweißdraht abgetastet wird, auf die Kantenhöhe sehr präzise gemessen und einem Sollwert gegenübergestellt werden. Zusätzlich zum oben genannten Kantendetektionsparameter kann nach der Ermittlung der Kante auch dieser Wert der Kantenhöhe in einer entsprechenden Genauigkeit (z.B. 16-BitWert) ausgegeben und beispielsweise an den Manipulator weitergeleitet werden.

Weiters kann aus den gespeicherten Positionen der Oberfläche der Werkstücke zwischen dem Ende der ermittelten Kante und der gespeicherten Position nach dem Feststellen der Kante die Kantenneigung ermittelt und ausgegeben werden. Wenn beim Abtastprozess auch die Kantenneigung ermittelt wird, kann diese in einem nachfolgenden Schweißprozess berücksichtigt werden und bei Abweichungen der tatsächlichen Kantenneigung vom Sollwert eine Anpassung von Schweißparametern zur Erzielung einer optimalen Schweißqualität vorgenommen werden. Ab einem gewissen voreingestellten Wert der Kantenneigung kann die Kantendetektion auch deaktiviert werden, da es sich dann nicht mehr um eine Kante handeln wird.

Schließlich kann aus den gespeicherten Positionen der Oberfläche der Werkstücke zwischen dem Ende der Kante und der gespeicherten Position nach dem Feststellen der Kante der Radius der Kante ermittelt und ausgegeben werden. Zusätzlich zu den oben erwähnten Kantenparametern stellt der Kantenradius einen weiteren Parameter dar, der beim Abtastprozess erfasst werden kann, sodass eine Berücksichtigung während eines Schweißprozesses vorgenommen werden kann. Bei Abweichungen des Kantenradius von einem gewünschten Wert kann eine entsprechende Anpassung der Schweißparameter während des Schweißprozesses vorgenommen werden, um Ausschuss zu vermeiden und die Wirtschaftlichkeit des Schweißverfahrens zu erhöhen.

Wenn der Kantendetektionsparameter und allenfalls die Kantenhöhe und allenfalls die Kantenneigung und allenfalls der Radius der Kante an den Manipulator übermittelt wird, kann zumindest einer dieser Parameter im Manipulator berücksichtigt werden. Beispielsweise kann die Geschwindigkeit des Manipulators verringert werden, wenn eine vom Sollwert abweichende Kantenhöhe detektiert wird. Auch bei Übermittlung sämtlicher Eigenschaften der Kante ist die Datenübertragung gegenüber herkömmlichen Verfahren, bei welchen sämtliche Positionswerte an den Manipulator übermittelt wurden, deutlich reduziert, wodurch das Verfahren rascher durchgeführt werden kann oder weniger Rechenleistung im Manipulator erforderlich ist. Eine aufwändige Verarbeitung der rohen Positionsdaten im Manipulator ist somit nicht mehr notwendig.

Als Schwellwert für die Feststellung einer Kante kann beispielsweise eine Distanz bzw. ein Positionswert in senkrechter Richtung zur Oberfläche der Werkstücke oder in Richtung der Längserstreckung des Schweißdrahtes, im Bereich zwischen 0,1mm und 20mm festgelegt werden. Diese Werte sind für eine zuverlässige Detektion einer Kante beim Abtastprozess besonders geeignet. Unterhalb der Grenze von 0,1mm ist die Festlegung eines Schwellwerts nicht sinnvoll, da es aufgrund der Genauigkeitsgrenzen der Einrichtungen zu Fehlinterpretationen und somit fehlerhaften Detektionen von Kanten kommen würde.

Entsprechend einer Abtastfrequenz von 20Hz bis 200Hz kann der Schweißdraht in Zeitabständen von 5ms bis 50ms, vorzugsweise von 10ms, zur Oberfläche der Werkstücke bewegt werden. Dies stellt einen vernünftigen Kompromiss zwischen der Genauigkeit der Detektion und einer möglichst raschen Durchführung dar.

Die Zeitabstände, mit welchen die Oberfläche der Werkstücke durch den Schweißdraht abgetastet werden, können an die Geschwindigkeit, mit welcher der Schweißbrenner während des Abtastprozesses über die Oberfläche der Werkstücke bewegt wird, entsprechend angepasst werden. Wenn also der Schweißbrenner während des Abtastprozesses mit einer geringeren Geschwindigkeit über die Oberfläche der Werkstücke bewegt wird, können längere Zeitintervalle zwischen den Abtastpunkten gewählt werden, als wenn der Schweißbrenner mit einer hohen Geschwindigkeit über die Werkstückoberfläche bewegt wird. Die untere Grenze für die Zeitintervalle zwischen zwei Abtastpunkten wird durch die Geschwindigkeit des Vorschubgeräts, mit dem der Schweißdraht zum Werkstück bewegt wird und vom Werkstück wieder wegbewegt wird, bestimmt. Die Zeitabstände und Abtastparameter können beispielsweise auch an das Material der Werkstücke, an das Material und den Durchmesser des verwendeten Schweißdrahts, die Geometrie des Schweißbrenners (Rohrbogenkrümmung), etc. angepasst werden.

Der Schweißbrenner wird vorzugsweise in einem Winkel von 60° bis 90° zur Oberfläche der Werkstücke orientiert, sodass der Schweißdraht in einem solchen Winkel von 60° bis 90° zur Oberfläche der Werkstücke und von der Oberfläche der Werkstücke weg bewegt werden kann. Diese Werte haben sich für das Abtastverfahren als besonders geeignet herausgestellt. Zu flache Winkel sind für das Abtastverfahren ungeeignet, da es durch ein seitliches Auslenken des Schweißdrahts bzw. Verbiegen des Schweißdrahts zu Ungenauigkeiten kommen kann.

Gemäß einem weiteren Merkmal der Erfindung kann der Schweißdraht während des Abtastprozesses mit einer höheren Rückwärtsgeschwindigkeit von der Oberfläche der Werkstücke wegbewegt werden, wenn ein längerer Kurzschluss zwischen dem Schweißdraht und den Werkstücken detektiert wird. Ein länger andauernder Kurzschluss zwischen dem Schweißdraht und den Werkstücken ist ein Indiz für das Vorliegen einer Kante, da trotz einer Rückwärtsbewegung des Schweißdrahts der Kurzschluss länger bestehen bleibt. Durch diese Maßnahme wird auf Veränderungen der Oberfläche der Werkstücke Rücksicht genommen und der Abtastprozess durch die höhere Rückwärtsgeschwindigkeit des Schweißdrahts beschleunigt. Insbesondere wenn der Schweißbrenner während des Abtastprozesses an eine Kante gelangt, wird dadurch der Schweißdraht rascher auf die durch die Kante bedingte höhere Position der Werkstückoberfläche gebracht. Die Dauer des Kurzschlusses, ab der eine höhere Rückwärtsgeschwindigkeit angewendet wird, kann aus entsprechenden Erfahrungswerten ermittelt und festgelegt werden.

Ebenso kann der Schweißdraht mit einer höheren Vorwärtsgeschwindigkeit zur Oberfläche der Werkstücke bewegt werden, nachdem der Schweißdraht mit einer höheren Rückwärtsgeschwindigkeit von der Oberfläche der Werkstücke wegbewegt und kein Kurzschluss detektiert wird. Auch diese Maßnahme trägt zu einer rascheren Durchführung des Abtastprozesses bei und das Ende der detektierten Kante kann somit genauer dargestellt werden.

Für eine ausreichend genaue Detektion einer Kante wird der Schweißbrenner an zumindest drei Stellen quer zu einer erwarteten Kante über die Oberfläche der Werkstücke bewegt. Dies stellt bei besonders häufig vorkommenden geraden Kanten zwischen zwei Werkstücken eine ausreichend genaue Erfassung dar, da dadurch der Anfangspunkt, Endpunkt und Verlauf der Kante eindeutig festgelegt wird.

Vorteilhafterweise werden während des Schweißprozesses automatisch Schweißparameter in Abhängigkeit der während des Abtastprozesses ermittelten Kante und allenfalls der ermittelten Kantenparameter, wie Kantenhöhe, Kantenneigung oder Kantenradius, geregelt. Wie bereits oben erwähnt, können die ermittelten realen Werte der Kantenparameter, wie Kantenhöhe, Kantenneigung oder Kantenradius, beim nachfolgenden Schweißprozess berücksichtigt werden und zur Erzielung einer besseren Schweißqualität bzw. Reduktion der Ausschussrate, eine Anpassung der Schweißparameter an die ermittelten realen Werte vorgenommen werden. Beispielsweise kann die Lichtbogenlänge, die Stick-out-Länge, die Drahtvorschubgeschwindigkeit oder die Brennergeschwindigkeit entsprechend angepasst werden oder unter bestimmten Voraussetzungen sogar ein Prozesswechsel durchgeführt werden.

Beispielsweise kann während des Schweißprozesses der Schweißstrom und bzw. oder die Schweißspannung und bzw. oder die Vorschubgeschwindigkeit des Schweißdrahts in Abhängigkeit der ermittelten Kante und allenfalls der ermittelten Kantenparameter, wie Kantenhöhe, Kantenneigung oder Kantenradius, geregelt werden.

Die vorliegende Erfindung wird anhand der beigefügten Zeichnungen näher erläutert. Darin zeigen:
- Fig. 1: eine Prinzipskizze eines Schweißgeräts zur Durchführung eines Schweißprozesses und Abtastprozesses;
- Fig. 2: ein möglicher Weg des Schweißbrenners entlang der Oberfläche metallischer Werkstücke während eines Abtastprozesses;
- Fig. 3: eine Prinzipskizze zur Erklärung des gegenständlichen Verfahrens zum Abtasten der Oberfläche metallischer Werkstücke zum Zwecke der Detektion einer Kante;
- Fig. 4: eine Prinzipskizze zur Erklärung der Ermittlung der Höhe einer Kante aus den Positionswerten der Oberfläche der Werkstücke;
- Fig. 5: eine Prinzipskizze zur Erklärung der Ermittlung der Kantenneigung den Positionswerten der Oberfläche der Werkstücke;
- Fig. 6: eine Prinzipskizze zur Erklärung der Ermittlung des Kantenradius aus den Positionswerten der Oberfläche der Werkstücke; und
- Fig. 7: eine Variante des erfindungsgemäßen Abtastverfahrens mit unterschiedlichen Vorschubgeschwindigkeiten des Schweißdrahts in Abhängigkeit der Positionswerte der Oberfläche der Werkstücke.

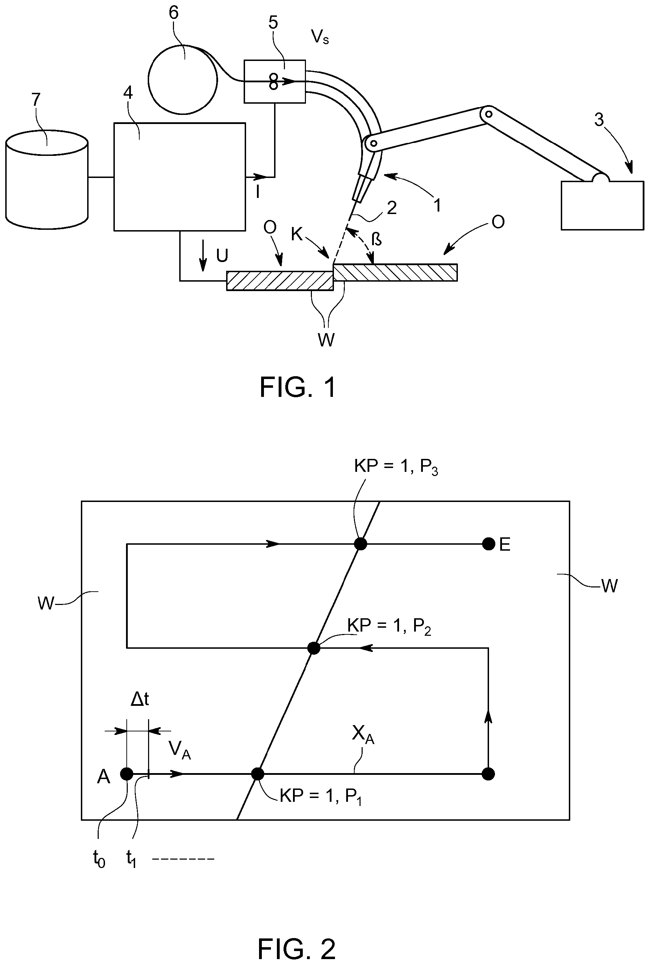

Fig. 1 zeigt eine Prinzipskizze eines Schweißgeräts zur Durchführung eines Schweißprozesses und Abtastprozesses. Ein Schweißbrenner 1 mit einem Schweißdraht 2 ist mit einem entsprechenden Manipulator 3, beispielsweise einem Schweißroboter verbunden. Eine Schweißstromquelle 4 versorgt den Schweißbrenner 1 bzw. den Schweißdraht 2 mit dem Schweißstrom I und der Schweißspannung U. Über ein Vorschubgerät 5 wird der Schweißdraht 2 mit einer Vorschubgeschwindigkeit v_{S} von einer Drahtrolle 6 zum Schweißbrenner 1 befördert. Während des Abtastprozesses wird der Schweißbrenner 1 mit dem Schweißdraht 2 mit Hilfe des Manipulators 3 entlang einer vorgegebenen Bahn x_{A} und mit einer vorgegebenen Geschwindigkeit V_{A} über die Oberfläche O der Werkstücke W bewegt. Zu vorgegebenen Zeitpunkten tᵢ wird der Schweißdraht 2 mit einer Vorwärtsgeschwindigkeit v_{SV} zur Oberfläche O der Werkstücke W bewegt, bis von der Schweißstromquelle 4 ein Kontakt des Schweißdrahts 2 mit einem der Werkstücke W detektiert wird. Diese Detektion erfolgt durch die Messung des Einbruchs der Spannung beim Kurzschluss zwischen Schweißdraht 2 und Werkstück W. Danach wird der Schweißdraht 2 mit einer Rückwärtsgeschwindigkeit v_{SR} wieder von den Werkstücken W wegbewegt. Die Position Pᵢ der Oberfläche O der Werkstücke W wird zu jedem der Zeitpunkte tᵢ in der Schweißstromquelle 4 ermittelt und gespeichert. Bei bisherigen Abtastverfahren wurden diese Positionswerte Pᵢ an den Manipulator 3 weitergeleitet, was einen hohen Datenaustausch zwischen Schweißstromquelle 4 und Manipulator 3 bedeutete und das Abtastverfahren verlangsamt. Erfindungsgemäß wird nun eine Kante K an der Oberfläche O der Werkstücke W ermittelt, wenn die aktuelle Position Pᵢ der Oberfläche O der Werkstücke W um einen vorgegebenen Schwellwert S über zumindest einer der gespeicherten vorhergehenden Positionen Pᵢ₋ₙ der Oberfläche O der Werkstücke W liegt. Im Falle der Überschreitung des vorgegebenen Schwellwerts S wird ein Kantendetektionsparameter KP gesetzt, im einfachsten Fall lediglich ein Bit auf "1" gesetzt und zusammen mit dem aktuellen Positionswert Pᵢ ausgegeben. Im Gegensatz zu bisherigen Verfahren muss nun lediglich der Wert des Kantendetektionsparameters KP zusammen mit dem aktuellen Positionswert Pᵢ an den Manipulator 3 übermittelt werden, wodurch das Verfahren erheblich beschleunigt oder die Genauigkeit erhöht werden kann. Während des Abtastprozesses wird der Schweißbrenner 1 vorzugsweise in ein einem Winkel β von 60° bis 90°zur Oberfläche O der Werkstücke W orientiert.

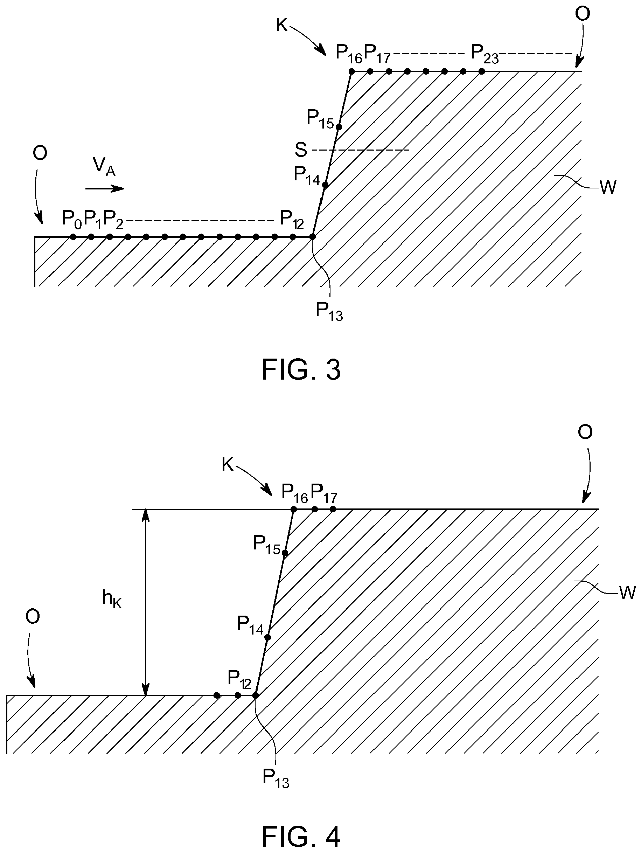

Fig. 2 zeigt einen möglichen Weg des Schweißbrenners 1 entlang der Oberfläche O metallischer Werkstücke W während eines Abtastprozesses in der Ansicht auf die Werkstücke W. Bei einer üblicherweise gerade verlaufenden Kante K eignet sich beispielsweise eine mäanderförmige Bahn x_{A} des Schweißbrenners 1 über die Werkstücke W für eine eindeutige Feststellung der Lage der Kante K. Dementsprechend wird der Schweißbrenner 1 von einem Anfangspunkt A mäanderförmig um die zu erwartende Lage der Kante K bis zu einem Endpunkt E geführt. Entlang der vorgegebenen Bahn x_{A} wird zu vorgegebenen Zeitpunkten tᵢ das Abtastverfahren durchgeführt, indem der Schweißdraht 2 zum Werkstück W bewegt wird, bis ein physischer Kontakt (Kurzschluss) zwischen Schweißdraht 2 und Werkstück W von der Stromquelle 4 festgestellt wird. Danach wird der Schweißdraht 2 vom Werkstück W wegbewegt, und die über den Antrieb des Vorschubgeräts 5 ermittelten Werte als Position Pᵢ der Oberfläche O der Werkstücke W festgelegt. Wenn eine Kante K detektiert wird (Beschreibung siehe Fig. 3) wird der Kantendetektionsparameter KP beispielsweise auf 1 gesetzt und die jeweilige Position Pᵢ gespeichert. Im dargestellten Ausführungsbeispiel werden an den 3 Punkten entlang der Kante K, wo der Kantenparameter KP=1 die Positionswerte P₁, P₂ und P₃ gespeichert. Somit ist es nicht mehr notwendig, sämtliche Positionswerte Pᵢ, welche zu allen Zeitpunkten tᵢ festgestellt werden, zu speichern, und an den Manipulator 3 weiterzuleiten, sondern lediglich den Kantendetektionsparameter KP, der im einfachsten Fall lediglich ein Bit umfasst, und den zugehörigen Positionswert Pᵢ. Somit kann zur eindeutigen Festlegung der geraden Kante K die Übermittlung von drei Kantenparametern KP samt Positionswerten Pᵢ ausreichen. Der Schweißbrenner 1 kann entsprechend der Lage der zu erwartenden Kante K entsprechend ausgerichtet werden, wodurch Rücksicht darauf genommen werden kann, ob der Schweißbrenner 1 von oben nach unten über die Kante K bewegt wird oder umgekehrt von unten nach oben.

In Fig. 3 ist eine Prinzipskizze zur Erklärung des gegenständlichen Verfahrens zum Abtasten der Oberfläche O metallischer Werkstücke W zum Zwecke der Detektion einer Kante K dargestellt. Diese Darstellung zeigt das erfindungsgemäße Abtastverfahren, bei dem zu vorgegebenen Zeitpunkten tᵢ die Positionen Pᵢ der Oberfläche O Werkstücke W mit Hilfe des Schweißdrahts 2 erfasst werden. Wenn die aktuelle Position Pᵢ der Oberfläche O der Werkstücke W um einen vorgegebenen Schwellwert S über zumindest einer der gespeicherten vorhergehenden Positionen Pᵢ₋ₙ der Oberfläche O der Werkstücke W liegt, wird ein Kantendetektionsparameter KP gesetzt und zusammen mit dem aktuellen Positionswert Pᵢ ausgegeben und das Vorliegen einer Kante K angezeigt. Im gegenständlichen Fall ist dies bei Position P₁₅ der Fall, wo der Schwellwert S überschritten wurde. Zur Glättung können Mittelwerte von mehreren, vorzugsweise 2 bis 100, gespeicherten vorhergehenden Positionen Pᵢ₋ₙ als Vergleichswert der aktuellen Position Pᵢ herangezogen werden. Durch eine entsprechende Mittelwertbildung wird bei einer langsam stetig ansteigenden Oberfläche O der Werkstücke W nie eine Kante K detektiert und der Kantendetektionsparameter KP gesetzt. Ebenso wie der Beginn der Kante K kann auch das Ende der Kante K über die Positionen Pᵢ ermittelt werden, wenn festgestellt wird, dass die aktuelle Position Pᵢ der Oberfläche O der Werkstücke W gegenüber zumindest einem der gespeicherten vorhergehenden Positionen Pᵢ₋ₙ im Wesentlichen gleich bleibt. Bei Position P₁₇ gemäß Fig. 3 ist die Position im Wesentlichen gleich wie der vorhergehende Wert P₁₆, sodass das Ende der Kante K definiert werden kann.

Fig. 4 zeigt eine Prinzipskizze zur Erklärung der Ermittlung der Höhe h_{K} einer Kante K aus den Positionswerten Pᵢ der Oberfläche O der Werkstücke W. Aus der Differenz der Positionen Pᵢ, Oberfläche O der Werkstücke W am Ende der ermittelten Kante K und der letzten gespeicherten Position vor dem Feststellen der Kante K kann die Kantenhöhe h_{K} ermittelt werden. Im gegenständlichen Beispiel würde die Höhe der Kante h_{K} als Differenz des Position P₁₆ und P₁₃ ermittelt werden.

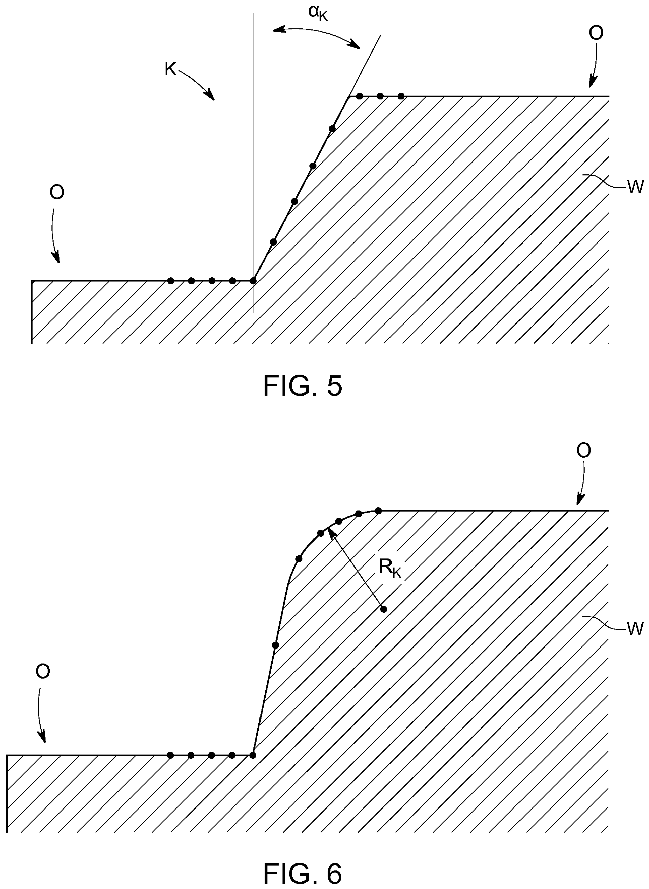

Fig. 5 zeigt eine Prinzipskizze zur Erklärung der Ermittlung der Kantenneigung α_{K} den Positionswerten Pᵢ der Oberfläche O der Werkstücke W. Aus den ermittelten Positionswerten Pᵢ und der Feststellung des Beginns und des Endes der Kante K kann die Kantenneigung α_{K} zuverlässig ermittelt werden.

In Fig. 6 ist eine Prinzipskizze zur Erklärung der Ermittlung des Kantenradius R_{K} aus den Positionswerten Pᵢ der Oberfläche O der Werkstücke W dargestellt. Aus den ermittelten Positionswerten Pᵢ ab dem Beginn der Detektion der Kante K bis zum Ende der Detektion der Kante K kann auf den Radius R_{K} der Kante K rückgeschlossen und ein entsprechender Wert ermittelt werden. Abweichungen des Kantenradius R_{K} vom Sollwert können während eines Schweißprozesses durch Anpassung der Schweißparameter, insbesondere des Schweißstroms I der Schweißspannung U oder der Vorschubgeschwindigkeit v_{S} des Schweißdrahtes 2 ausgeglichen werden.

Während des durchzuführenden Schweißprozesses können die Schweißparameter, wie zum Beispiel die Lichtbogenlänge, die Stick-out-Länge, die Drahtvorschubgeschwindigkeit oder die Brennergeschwindigkeit an die zuvor beim Kantendetektionsprozess ermittelten Kantenparaameter (Kantenhöhe, Kantenneigung, Kantenradius) angepasst werden. Wenn ein Schweißprozess aufgrund der realen Kantenbedingungen nicht durchgeführt werden kann, beispielsweise, weil der Durchmesser des Schweißdrahts zu gering ist, kann eine Fehlermeldung ausgegeben werden.

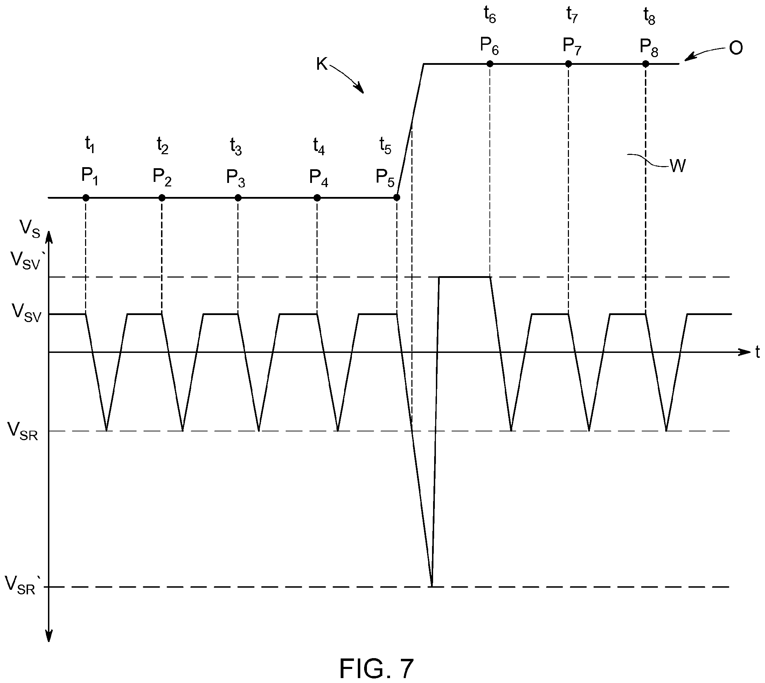

Schließlich zeigt Fig. 7 eine Variante des erfindungsgemäßen Abtastverfahrens mit unterschiedlichen Vorschubgeschwindigkeiten V_{S} des Schweißdrahts 2 in Abhängigkeit der Positionswerte Pᵢ der Oberfläche O der Werkstücke W. Im oberen Teil der Fig. 7 ist wiederum eine Kante K zwischen zwei Werkstücken W im Querschnitt dargestellt, und die Zeitpunkte tᵢ, zu welchen die Position Pᵢ der Oberfläche O der Werkstücke W festgestellt wird, beginnend mit der Position P₁ zum Zeitpunkt t₁ bis zur Position P₈ zum Zeitpunkt t₈. Während des Abtastprozesses wird der Schweißdraht 2 zu den Zeitpunkten tᵢ mit einer vorgegebenen Vorwärtsgeschwindigkeit v_{SV} zum Werkstück W bewegt, bis ein Kurzschluss detektiert wird und danach mit einer vorgegebenen Rückwärtsgeschwindigkeit v_{SR} vom Werkstück W wegbewegt. Dies ist bei den ersten fünf Punkten P₁ bis P₅ dargestellt. Wird aufgrund der Kante K ein längerer Kurzschluss detektiert, was bei Position P₅ zum Zeitpunkt t₅ der Fall ist, kann der Schweißdraht 2 mit einer höheren Rückwärtsgeschwindigkeit v_{SR}' von der Oberfläche O der Werkstücke W wegbewegt werden. Dadurch kann das Abtastverfahren noch schneller und genauer durchgeführt werden. Nach dem Abtastschritt mit der höheren Rückwärtsgeschwindigkeit V_{SR}' wird die Vorwärtsgeschwindigkeit v_{SV} auf eine höhere Vorwärtsgeschwindigkeit V_{SV}' erhöht, sofern kein Kurzschluss mehr detektiert wird. Dies ist im dargestellten Ausführungsbeispiel vor der Position P₆ zum Zeitpunkt t₆ der Fall.

## Patentansprüche

1. Verfahren zum Abtasten der Oberfläche (O) metallischer Werkstücke (W), wobei vor der Durchführung eines Schweißprozesses während eines Abtastprozesses ein Schweißbrenner (1) mit einem abschmelzbaren Schweißdraht (2) mit Hilfe eines Manipulators (3) entlang einer vorgegebenen Bahn (x_{A}) und mit einer vorgegebenen Geschwindigkeit (v_{A}) über die Oberfläche (O) der Werkstücke (W) bewegt wird, und zu vorgegebenen Zeitpunkten (tᵢ) der Schweißdraht (2) mit einer Vorwärtsgeschwindigkeit (v_{SV}) zur Oberfläche (O) der Werkstücke (W) bewegt wird, bis von einer Schweißstromquelle (4) ein Kontakt des Schweißdrahts (2) mit einem der Werkstücke (W) detektiert wird, und der Schweißdraht (2) anschließend mit einer Rückwärtsgeschwindigkeit (v_{SR}) wieder von den Werkstücken (W) wegbewegt wird, und die Position (Pᵢ) der Oberfläche (O) der Werkstücke (W) zu jedem Zeitpunkt (tᵢ) in der Schweißstromquelle (4) ermittelt und gespeichert wird, **dadurch gekennzeichnet, dass** eine Kante (K) ermittelt wird, wenn die aktuelle Position (Pᵢ) der Oberfläche (O) der Werkstücke (W) um einen vorgegebenen Schwellwert (S) über zumindest einer der gespeicherten vorhergehenden Positionen (Pᵢ₋ₙ) der Oberfläche (O) der Werkstücke (W) liegt, und dass im Falle der Ermittlung einer Kante (K) ein Kantendetektionsparameter (KP) gesetzt und zusammen mit dem aktuellen Positionswert (Pᵢ) ausgegeben wird.

2. Verfahren nach Anspruch 1, **dadurch gekennzeichnet, dass** eine Kante (K) ermittelt wird, wenn die aktuellen Position (Pᵢ) der Oberfläche (O) der Werkstücke (W) um den vorgegebenen Schwellwert (S) über dem Mittelwert von mehreren, vorzugsweise 2 bis 100 gespeicherten vorhergehenden Positionen (Pᵢ₋ₙ) der Oberfläche (O) der Werkstücke (W) liegt.

3. Verfahren nach Anspruch 1 oder 2, **dadurch gekennzeichnet, dass** das Ende der Kante (K) festgestellt wird, wenn die aktuelle Position (Pᵢ) der Oberfläche (O) der Werkstücke (W) gegenüber zumindest einem der gespeicherten vorhergehenden Positionen (Pᵢ₋ₙ) im Wesentlichen gleich bleibt.

4. Verfahren nach Anspruch 3, **dadurch gekennzeichnet, dass** die Differenz der Position (Pᵢ) der Oberfläche (O) der Werkstücke (W) am Ende der ermittelten Kante (K) und der letzten gespeicherten Position (Pᵢ) vor dem Feststellen der Kante (K) als Wert der Kantenhöhe (h_{K}) ermittelt und ausgegeben wird.

5. Verfahren nach Anspruch 3 oder 4, **dadurch gekennzeichnet, dass** aus den gespeicherten Positionen (Pᵢ) der Oberfläche (O) der Werkstücke (W) zwischen dem Ende der ermittelten Kante (K) und der gespeicherten Position (Pᵢ) nach dem Feststellen der Kante (K) die Kantenneigung (α_{K}) ermittelt und ausgegeben wird.

6. Verfahren nach einem der Ansprüche 3 bis 5, **dadurch gekennzeichnet, dass** aus den gespeicherten Positionen (Pᵢ) der Oberfläche (O) der Werkstücke (W) zwischen dem Ende der ermittelten Kante (K) und der gespeicherten Position (Pᵢ) nach dem Feststellen der Kante (K) der Radius (R_{K}) der Kante (K) ermittelt und ausgegeben wird.

7. Verfahren nach einem der Ansprüche 1 bis 6, **dadurch gekennzeichnet, dass** der Kantendetektionsparameter (KP)und allenfalls die Kantenhöhe (h_{K}) und allenfalls die Kantenneigung (α_{K}) und allenfalls der Radius (R_{K}) der Kante (K) an den Manipulator (3) übermittelt wird.

8. Verfahren nach einem der Ansprüche 1 bis 7, **dadurch gekennzeichnet, dass** der Schweißdraht (2) in Zeitabständen (Δt) von 5ms bis 50ms, vorzugsweise von 10ms, zur Oberfläche (O) der Werkstücke (W) bewegt wird.

9. Verfahren nach Anspruch 8, **dadurch gekennzeichnet, dass** die Zeitabstände (Δt) an die Geschwindigkeit (v_{A}), mit welcher der Schweißbrenner (1) während des Abtastprozesses über die Oberfläche (O) der Werkstücke (W) bewegt wird, angepasst wird.

10. Verfahren nach einem der Ansprüche 1 bis 9, **dadurch gekennzeichnet, dass** der Schweißbrenner (1) in einem Winkel (β) von 60° bis 90° zur Oberfläche (O) der Werkstücke (W) orientiert wird, sodass der Schweißdraht (2) in einem solchen Winkel (β) von 60° bis 90° zur Oberfläche (O) der Werkstücke (W) und von der Oberfläche (O) der Werkstücke (W) weg bewegt wird.

11. Verfahren nach einem der Ansprüche 1 bis 10, **dadurch gekennzeichnet, dass** der Schweißdraht (2) mit einer höheren Rückwärtsgeschwindigkeit (v_{SR}') von der Oberfläche (O) der Werkstücke (W) wegbewegt wird, wenn ein längerer Kurzschluss zwischen dem Schweißdraht (2) und den Werkstücken (W) detektiert wird.

12. Verfahren nach Anspruch 11, **dadurch gekennzeichnet, dass** der Schweißdraht (2) mit einer höheren Vorwärtsgeschwindigkeit (v_{SV}') zur Oberfläche (O) der Werkstücke (W) bewegt wird, nachdem der Schweißdraht (2) mit einer höheren Rückwärtsgeschwindigkeit (v_{SR}') von der Oberfläche (O) der Werkstücke (W) wegbewegt und kein Kurzschluss detektiert wird.

13. Verfahren nach einem der Ansprüche 1 bis 12, **dadurch gekennzeichnet, dass** der Schweißbrenner (1) an zumindest drei Stellen quer zu einer erwarteten Kante (K) über die Oberfläche (O) der Werkstücke bewegt wird.

14. Verfahren nach einem der Ansprüche 1 bis 13, **dadurch gekennzeichnet, dass** während des Schweißprozesses automatisch Schweißparameter in Abhängigkeit der während des Abtastprozesses ermittelten Kante (K) und allenfalls der ermittelten Kantenparameter, wie Kantenhöhe (h_{K}), Kantenneigung (α_{K}) oder Kantenradius (R_{K}), geregelt werden.

15. Verfahren nach Anspruch 14, **dadurch gekennzeichnet, dass** während des Schweißprozesses der Schweißstrom (I) und bzw. oder die Schweißspannung (U) und bzw. oder die Vorschubgeschwindigkeit (v_{S}) des Schweißdrahts (2) in Abhängigkeit der während des Abtastprozesses ermittelten Kante (K) und allenfalls der ermittelten Kantenparameter, wie Kantenhöhe (h_{K}), Kantenneigung (α_{K}) oder Kantenradius (R_{K}), geregelt werden.
